# EUROPEAN PATENT APPLICATION

(11) **EP 4 671 157 A1**
(43) Date of publication of application: **31.12.2025**
(21) Application number: 24778025.7
(22) Date of filing: 26.03.2024
(51) Int. Cl.: B65G 1/04, B65G 1/137

(54) **RACK, WAREHOUSING SYSTEM AND CONVEYING SYSTEM**

(30) Priority: 27.03.2023 CN 202310329318
(71) Applicant: Zhejiang Libiao Robotics Co., Ltd., Hangzhou, Zhejiang 311100 (CN)
(72) Inventor: ZHU, Jianqiang, Hangzhou, Zhejiang 311100 (CN)
(74) Representative: Hautier IP - MC/EP
(86) International application number: PCT/CN2024/083886
(87) International publication number: WO 2024/199237

(57) **Abstract**

A rack (10), which is used for warehousing. The rack is provided with a multi-layer storage space (101), wherein a goods box (104) is placed at each warehousing site (103) of the storage space; a fixed rail conveying apparatus (102) or fixed rail conveying apparatuses (102) is/are provided on one side and/or both sides of the rack, by means of one first moving member (13), each fixed rail conveying apparatus drives a task module (14) for storing/retrieving the goods box and/or goods, so as to place the goods into or retrieve the goods from a connecting assembly of a freight robot (17) operating at the bottom (16) of the rack, a partition plate (18) for one or more warehousing sites on the bottom-most rack tier is removed from the rack so as to provide a passage for the freight robot on the ground; alternatively, one or more rack tiers (19) are removed from the rack to provide a matching height for supporting the operation of the freight robot on the ground. The present application greatly improves the warehousing space utilization rate and goods incoming/outgoing speed and sorting efficiency of existing racks and warehousing systems.

## Description

### CROSS-REFERENCE TO RELATED APPLICATION

The present disclosure claims priority to Chinese patent Application No. 2023103293183, filed with the Chinese Patent Office on March 27, 2023, entitled "RACK, WAREHOUSING SYSTEM AND CONVEYING SYSTEM", the entire contents of which are incorporated herein by reference.

### TECHNICAL FIELD

The present disclosure relates to the technical field of rapid sorting, and in particular to a rack, a warehousing system, and a conveying system.

### BACKGROUND ART

Warehousing is the costliest part of freight conveying. The existing warehousing systems all require the construction of warehousing bases or warehousing centers, and the storage and retrieval of goods/bins are accomplished by warehousing freight robots in a warehousing environment.

The existing process from the warehouse to sorting requires that the goods be moved out of the warehouse rack by warehousing freight robots, and then the warehousing freight robots convey the goods to a sorting table or sorting system. The traditional form of warehousing, conveying, and exchange requires a large area, has conveying efficiency limited by the warehousing freight robot, and requires the participation of a dedicated sorting system, which results in extremely high time and configuration costs.

Therefore, the prior warehousing and conveying system has technical problems of low storage access efficiency, insufficient space utilization, and high ground costs.

### SUMMARY

Embodiments of the present disclosure provide a rack, a warehousing system, and a conveying system, which greatly improve the utilization of warehousing space, goods in-out speed, and sorting efficiency of the prior warehousing system.

A rack for warehousing is provided, wherein the rack is provided with multiple tiers of reservation units; bins are placed in slots of the reservation units; and the rack is provided with a fixed rail conveying apparatus on one side and/or both sides, wherein

The fixed rail conveying apparatus, through a first movable member, drives a task module for accessing the bins and/or goods, and places the goods into a docking assembly of a freight robot operating at a bottom of the rack or removes the goods from the docking assembly.

Partition plates of one or more slots, at a lowest tier of the rack, are removed from the rack to provide a passage for a freight robot, or
one or more rack tiers are removed from the rack to provide a matching height to support an operation of the freight robot on ground.

Optionally, the fixed rail conveying apparatus includes:
a transverse rail, a first upright, a first movable member, and a connection mechanism of the task module;
the transverse rail is fixed to the rack;
the first upright is vertically arranged on the transverse rail and is transversely slidable;
the first movable member is arranged on the first upright and is slidable along the first upright; and
the connection mechanism of the task module is arranged on the first movable member.

Optionally, when the task module is a push-pull bin module, the connection mechanism of the task module is provided with:
a support structure of the push-pull bin module,
   and
a conveying assembly of the push-pull bin module.

Optionally, the support structure is a loading/unloading rack.

Optionally, the conveying assembly is a conveying belt.

Optionally, the rack is applied in a rectangular cubic warehousing space, the warehousing space is provided with multiple rows of racks, and the rectangular cubic warehousing space is movable.

Optionally, the racks can be arranged in multiple tiers, the racks in multiple tiers can share one fixed rail conveying apparatus, or each of the racks is provided with one or more fixed rail conveying apparatus.

Optionally, the racks can be spliced transversely, the transversely spliced racks can share one fixed rail conveying apparatus, or each of the transversely spliced racks is provided with one or more fixed rail conveying apparatus.

Optionally, the rack further includes: a second upright and a second movable member, wherein the second upright is vertically arranged on the transverse rail and is transversely slidable;
the second movable member is arranged on the second upright and is slidable along the second upright;
the connection mechanism of the task module is arranged on the second movable member; and
the task module is arranged between the first upright and the second upright via the connection mechanism,
so that the task module is driven to be positioned at a storage position or a docking position on the rack.

Optionally, the rack further includes:
another transverse rail fixed to a lower part of the rack, wherein
the two transverse rails are connected to the first upright and second upright via sliding blocks; and
the sliding blocks move on the transverse rails under the drive of rollers, and the rollers are driven by a motor.

Optionally, a synchronous pulley driven by the motor and controlled by a speed reducer is provided, wherein the synchronous belt pulley drives a synchronous belt to support the movement of the first movable member along a sliding rail of the first upright; and
another synchronous pulley driven by the motor and controlled by a speed reducer is provided, wherein the another synchronous belt pulley drives another synchronous belt to support the movement of the second movable member along a sliding rail of the second upright.

Optionally, the freight robot is an AGV.

Optionally, the freight robot is an autonomous mobile robot.

A warehousing system is provided, including the rack as described above.

A conveying system is provided, including the warehousing system and the freight robot.

The rack provided by the embodiments of the present disclosure, which is a basic unit for warehousing, serves as the foundation of the warehousing system. Multiple racks can be arranged in tiers or arranged in a transverse splicing manner. The multiple racks can share one fixed rail conveying apparatus, or each of the racks is provided with one or more fixed rail conveying apparatus. The fixed rail conveying apparatus is provided with the transverse rail for the upright to move. Through the configuration of the racks and the modification of the top of the warehousing space and the bottom tier of the rack, it provides an operating passage for the freight robot or the sorting robot, which fundamentally solves the problem of waste of warehousing space in the existing warehousing system. Meanwhile, the task module of the warehouse, driven by the movable member, accesses the bin(s) and/or good(s), puts them into the docking assembly of the freight robot operating at the bottom of the racks or removes them from the docking assembly. Therefore, the bin(s) and/or good(s) of the warehouse can cooperate with the freight robot or the sorting robot, which makes it possible to complete warehousing of the goods, conveying of the bin(s)/good(s), and sorting of the bin(s)/good(s) in the warehousing space, thereby greatly improving the utilization of warehousing space, goods in-out speed, and sorting efficiency of the existing rack warehousing system.

### BRIEF DESCRIPTION OF DRAWINGS

The drawings illustrated herein are used to provide a further understanding of the present disclosure and form a part of the present disclosure. The schematic embodiments of the present disclosure and their description are used to explain the present disclosure, and do not constitute an undue limitation of the present disclosure. In the drawings,
FIG. 1 shows a structure schematic diagram of a rack in the embodiments of the present disclosure;
FIG. 2 shows a structure schematic diagram of a rack in the embodiments of the present disclosure;
FIG. 3 shows a structure schematic diagram of a rack in the embodiments of the present disclosure;
FIG. 4 shows a structure schematic diagram of a rack in the embodiments of the present disclosure;
FIG. 5 shows a structure schematic diagram of a rack in the embodiments of the present disclosure;
FIG. 6 shows a structure schematic diagram of a rack in the embodiments of the present disclosure;
FIG. 7 shows a structure schematic diagram of a rack in the embodiments of the present disclosure;

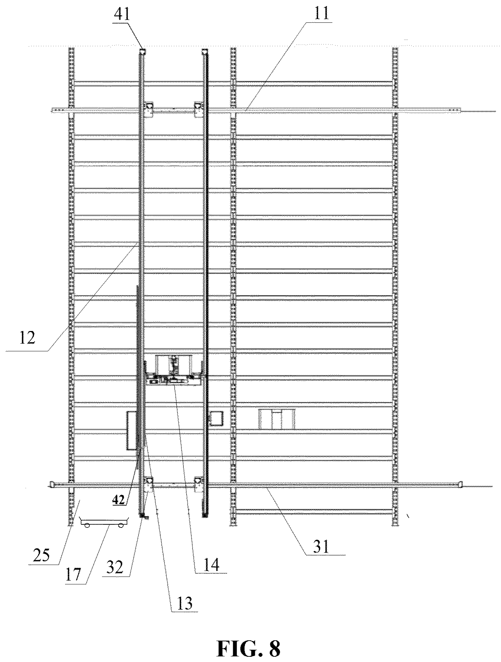

FIG. 8 shows a structure schematic diagram of a rack in the embodiments of the present disclosure;
FIG. 9 shows a structure schematic diagram of a local part of a rack in the embodiments of the present disclosure; and
FIG. 10 shows a structure schematic diagram of a conveying system in the embodiments of the present disclosure.

### DETAILED DESCRIPTION OF EMBODIMENTS

In order to make the objectives, technical solutions, and advantages of the examples of the present disclosure clearer, the technical solutions in the examples of the present disclosure will be described clearly and completely below in conjunction with drawings in the embodiments of the present disclosure. Obviously, the embodiments described above are some embodiments of the present disclosure, and not all embodiments. The components of embodiments of the present disclosure generally described and shown in the drawings herein can be arranged and designed in various configurations.

Therefore, the following detailed description of the embodiments of the present disclosure arranged in the drawings is not intended to limit the scope of the present disclosure for which protection is claimed, but only represents selected embodiments of the present disclosure. Based on the embodiments in the present disclosure, all other examples obtained by a person of ordinary skill in the art without inventive efforts, all fall within the scope of protection of the present disclosure.

It should be noted that similar symbols and letters denote similar items in the following drawings, so that once an item is defined in a drawing, no further definition or explanation is required in the subsequent drawings.

In the description of the present disclosure, it should be noted that the orientation or position relationship indicated by the terms, "center", "up", "down", "left", "right", "vertical", "horizontal", "inside", "outside", etc., is the orientation or position relationship based on the drawings, or is the orientation or position relationship of the product of the present disclosure customarily placed in use. It is only to facilitate the description of the present disclosure and simplify the description, and is not to indicate or imply that the device or element referred to must have a particular orientation, or be constructed and operated with a particular orientation. Therefore, it cannot to be understood as limitations of the present disclosure.

Additionally, the terms "first", "second", and "third", etc., are used only to differentiate the description, and are not to be understood as indicating or implying relative importance.

Additionally, the terms "horizontal", "vertical", "overhanging", etc., do not mean that the component must be absolutely horizontal or overhanging, but can be slightly inclined. For example, "horizontal" only means that its direction is more horizontal relative to "vertical", and does not mean that the structure must be completely horizontal, but can be slightly inclined.

In the description of the present disclosure, it should also be noted that unless other expressly specifications and limitations, the terms "arrange", "mount", "connect", and "link" are to be understood in a broad sense. For example, it can be a fixed connection, a detachable connection, or an integral connection; it can be a mechanical connection or an electrical connection; and it can be a direct connection, an indirect connection through an intermediate medium, or a communication inside two components. For a person of ordinary skill in the art, the specific meaning of the above terms in the present disclosure can be understood according to specific situations.

It is noted that features in embodiments in the present disclosure can be combined with each other without conflict.

The embodiments of the present disclosure provide a conveying system for warehousing, which greatly improves the utilization of space and the efficiency of warehousing entry and exit of the prior warehousing system.

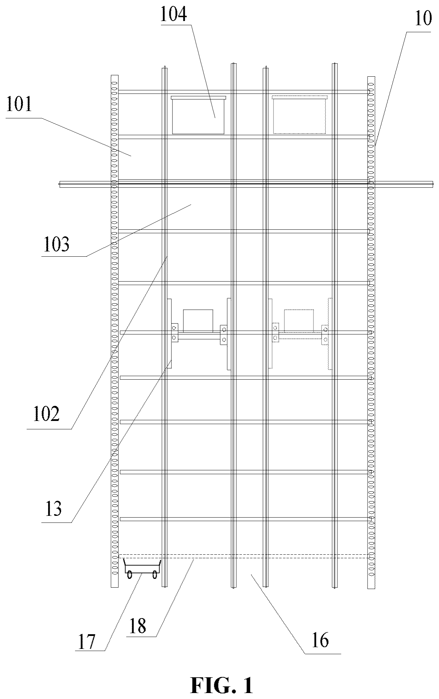

FIG. 1 shows a rack 10 for warehousing. The rack 10 is provided with multiple tiers of reservation units 101; a bin 104 is placed in a slot 103 of each reservation unit 101; and the rack is provided with a fixed rail conveying apparatus 102 on one side and/or both sides.

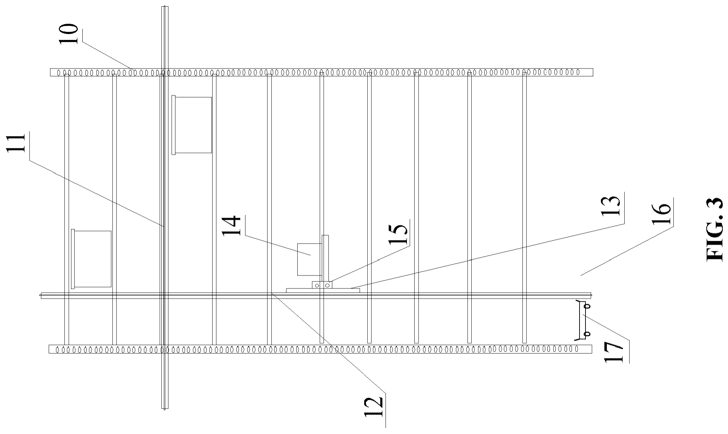

The fixed rail conveying apparatus 102, through a first movable member 13a, drives a task module 14 (referring to FIG. 3) for accessing the bins 104 and/or goods, and places the goods into a docking assembly of a freight robot 17 operating at a bottom 16 of the rack or removes the goods from the docking assembly.

Referring to FIG. 1, partition plates 18 of one or more slots at a lowest rack tier are removed to provide a passage for a freight robot.

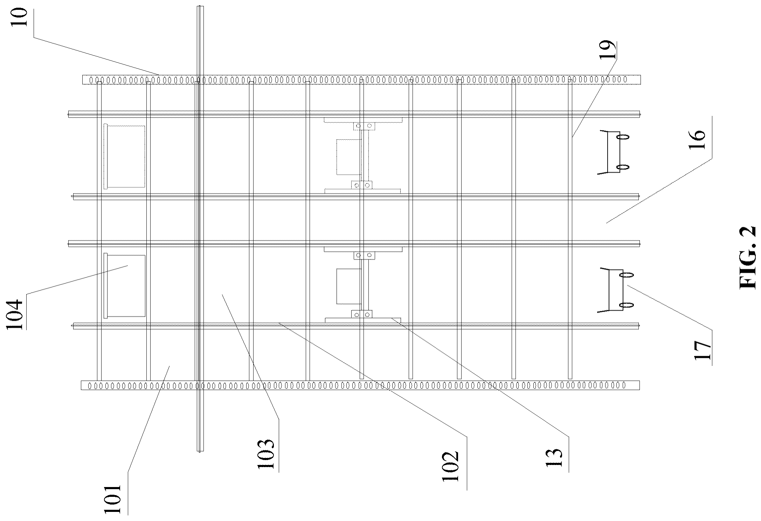

Referring to FIG. 2, alternatively, one or more rack tiers 19 of the rack are removed to provide a matching height, supporting the operation of the freight robot 17 on the ground.

Referring to FIG. 3, the fixed rail conveying apparatus includes:

a transverse rail 11, a first upright 12, a first movable member 13, and a connection mechanism of the task module 14, wherein

the transverse rail 11 is fixed to the rack 10.

It should be noted that the transverse rail 11 is fixed to the beam or upright of the rack 10. When the rack has a relatively long transverse span, the fixation of the transverse rail needs to rely on the beam and an upright of a single rack, and the transverse rail also extends to the beam of the adjacent rack.

The first upright 12 is vertically arranged on the transverse rail 11 and is transversely slidable.

The upright 12 slides on the transverse rail 11, so that the positioning for each column of the rack can be realized by the first movable member 13.

The first movable member 13 is arranged on the first upright 12 and is slidable along the first upright 12.

The first movable member 13 in the above arrangement can move transversely and vertically, so as to realize the positioning for each tier of the rack by the first movable member 13.

The connection mechanism 15 of the task module 14 is arranged on the first movable member 13.

The task module 14, driven by the first movable member 13, accesses and stores the bin(s) 104 and/or the good(s), and places them into the docking assembly of the freight robot 17 operating at the bottom 16 of the rack 10.

In this arrangement, when the task module completes a sorting and/or an accessing operation, the accessed bin(s) 104 and/or the good(s) can be conveyed, sorted, or transferred to a target storage position, a sorting position, or even a conveying position after sorting, through the docking of the freight robot 17.

The task module 14 can be a component capable of operating one or more tasks such as identifying, extracting, replaying, and grasping. The task module 14, driven by the first movable member 13, is positioned at the slot of the rack 10. Meanwhile, the connection mechanism of the task module is a basic structure that can be connected to different task modules.

When the task module is a push-pull bin module, it includes:
a support structure of the push-pull bin module, such as a loading/unloading rack,
   and
a conveying assembly of the push-pull bin module, such as a conveying belt. The conveying belt needs to be driven by a conveying motor.

However, in the case of other task modules, the connectors are provided according to the specific function of the task module, and are not limited to this.

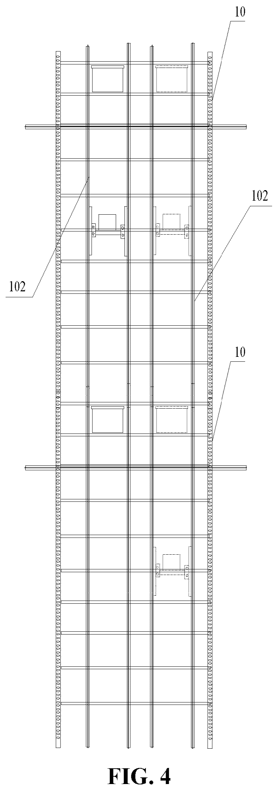

Referring to FIG. 4, multiple racks 10 can be arranged in tiers, and the multiple tiers of the racks can share one fixed rail conveying apparatus, or one or more fixed rail conveying apparatus 102 can be respectively arranged. The dashed box in the diagram represents the back side of the rack.

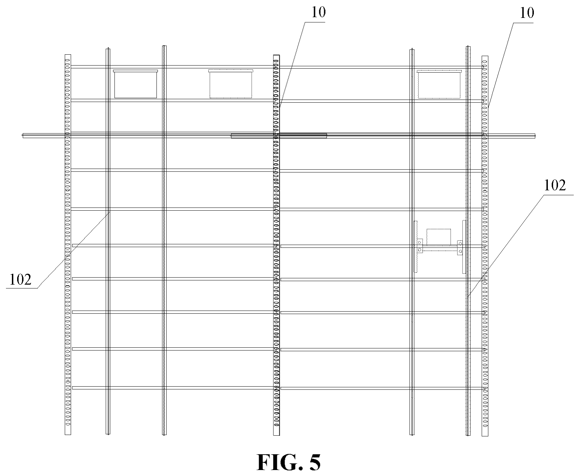

Alternatively, the racks in FIG. 5 can be spliced in the transverse direction, and the transversely-spliced racks can share one fixed rail conveying apparatus, or one or more fixed rail conveying apparatus 102 can be respectively arranged. The dashed box in the diagram represents the back side of the rack.

Therefore, in the embodiment, through the modification of the bottom rack tier of the rack, the arrangements and position combinations between the racks, and in cooperation with the freight robot or the sorting robot, the problem of low efficiency in transferring and sorting the goods or bins in existing rack warehousing can be fundamentally solved. Moreover, the application scenario of the rack is expanded, enabling storage of goods, transfer and sorting of goods or bins to be completed within the warehousing space, thereby realizing a significant improvement of the storage space utilization, goods in-and-out speed, and sorting efficiency of the existing rack warehousing system.

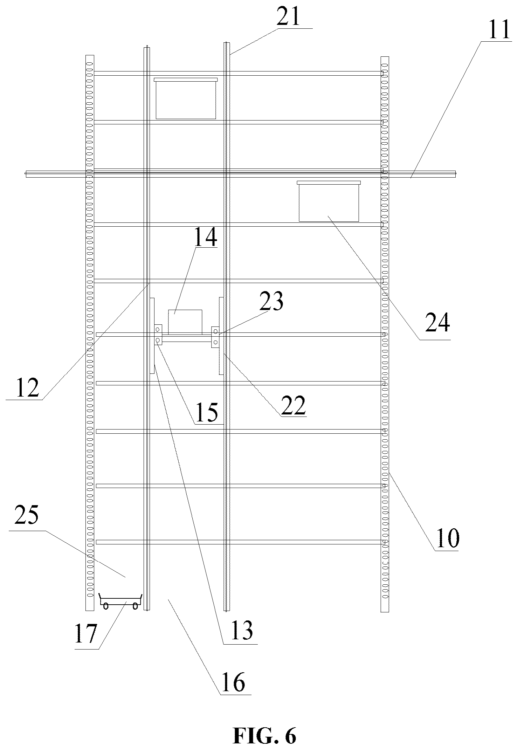

FIG. 6 shows a conveying system based on warehousing.

Based on the illustrations and descriptions of FIGS 1-5, the conveying apparatus further includes: a second upright 21 and a second movable member 22, wherein the second upright 21 is vertically arranged on the transverse rail 11 and is transversely slidable; the second movable member 22 is arranged on the second upright 21 and slidable along the second upright.

The connection mechanism 23 of the task module 14 is arranged on the second movable member 22.

The task module 14 is arranged between the first upright 12 and the second upright 21 via the connection mechanism 23.

The first movable member 12 and the second movable member 21 drive the task module 14 to be positioned at a storage position 24 or a docking position 25 on the rack 10.

The docking position 25 is a position where, after the task module 14 accesses the bin(s) and/or the good(s) from the storage position of the rack, the good(s) are transferred from the task module 14 to the freight robot.

The partition plates at the bottom tier of the warehousing rack are removed to provide a matching height, so that the freight robot operates on the ground and completes the docking actions. The bottom partition plates between the adjacent uprights of the warehousing rack are removed to form the docking position 25 of the freight robot.

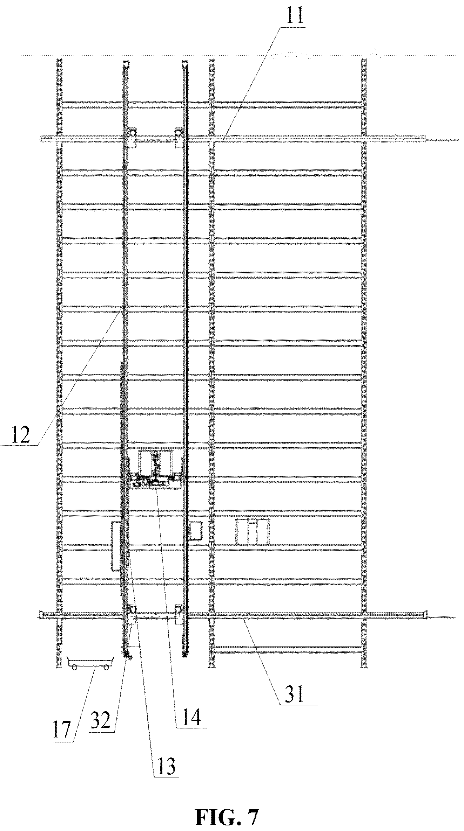

FIG. 7 shows a conveying system for warehousing. Based on the illustrations and corresponding descriptions of FIG. 1 and FIG. 6, in FIG. 7, another transverse rail 31 is fixed to a lower part of the rack 10, and is by rollers mounted at the lower part of the first upright 12 and the lower part of the second upright 21, driven by a motor 32, so as to enable rolling on the transverse rail 31.

In the embodiment, for the large-scale rack system, a more stable rail conveying apparatus is required. Therefore, two transverse rails are respectively arranged at the lower part and the upper part of the rail assembly to firmly fix the first upright 12 and the second upright 21, so as to ensure the reliable execution of tasks such as pushing and pulling, docking, and sorting of the good(s)/bin(s).

In the embodiments related to FIG. 1-FIG. 7, it is to be noted that the freight robot is a freight robot operating on the floor at the bottom tier of the rack. As an achievable embodiment, the freight robot can be selected as an AGV (automated guided vehicle, also commonly referred to as an automated guided cart), or an AMR (autonomous mobile robot).

In order to ensure full disclosure, the freight robot can adopt the freight robot in the disclosed documents.

Optionally, the freight robot at least performs the path planning under the control of the server; or the freight robot performs the path planning autonomously. A component for planar movement and a docking assembly supporting pushing, pulling, and placing of bins are provided. In order to improve conveying efficiency, the freight robot can operate directly on the floor right beneath the rack, and can be used to remove the bottom partition plate of the rack. The bin(s), driven by the movable member, places the goods to be accessed onto the docking assembly of the freight robot. The freight robot can be a freight robot or a sorting robot. The above cooperation makes it possible to complete warehousing of the goods, conveying of the goods/bins, and sorting of the goods/bins in the warehousing space.

As an achievable method, based on a similar principle, the movable member can operate on the sliding rail of the upright as illustrated in the following figures. The specific electrical control method is not limited and is not shown in detail.

The first movable member moves on the sliding rail of the first upright, and the movement is realized by a synchronous pulley and a synchronous belt driven by a motor and controllable through a speed reducer.

The second movable member moves on the sliding rail of the second upright, and the movement is realized by a synchronous pulley and a synchronous belt driven by a motor and controllable through a speed reducer.

The above arrangement can accurately ensure the position between the task module and the bin, and greatly improves the utilization of warehousing space, goods in-out speed, and sorting efficiency of the existing warehousing system.

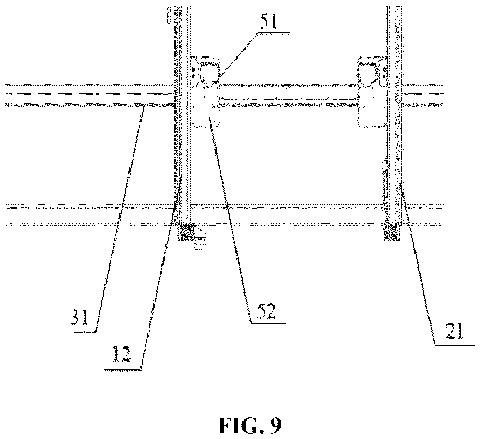

FIG. 9 shows a local part of the conveying system for warehousing.

In the embodiment, FIG. 9 shows a connection structure among the transverse rail 11, the first upright 12, and the second upright 21. Referring to FIG. 7, the connection structure can be realized by the roller 51 driving the sliding block 52 to move on the transverse rail 31. The first upright 12 and the second upright 21 are sleeved on the fixation positions of the sliding block 52, and the roller 51 is in contact with the transverse rail 31 to realize smooth movement.

The above arrangement is merely one embodiment and is not limited thereto.

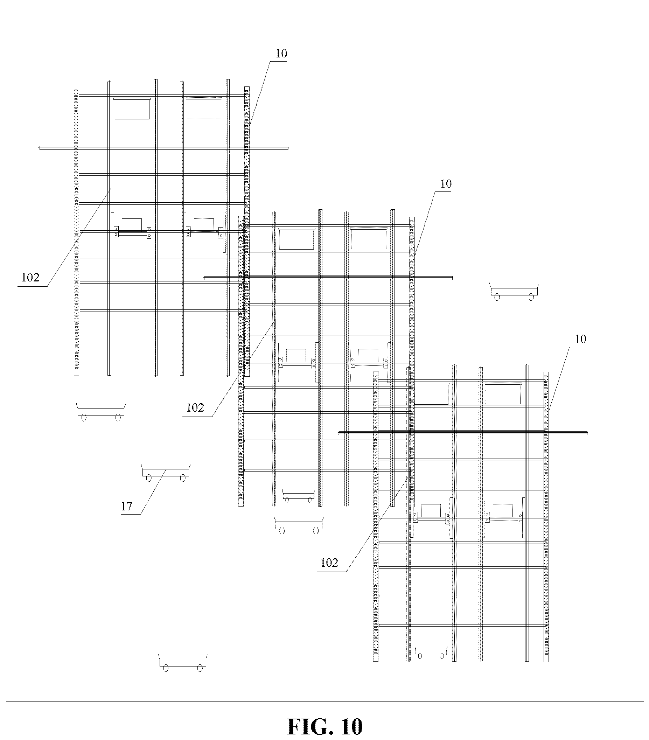

FIG. 10 shows a warehousing system, including one or multiple racks. The structure and working principle of the racks can refer to FIGS 1-5, and the racks can be provided with the fixed rail conveying apparatus. During operation, the fixed rail conveying apparatus can be arranged on one or multiple racks. They can operate independently under the control of the chip and software instructions, or cooperatively operate within the warehouse management software built into the server side.

In addition, the present disclosure further discloses a conveying system, including the warehousing system and multiple freight robots 17 in FIG. 10. Based on this arrangement, the efficiency of accessing, conveying, and sorting of goods can be further improved, thereby meeting the technical requirements for rapid conveying and transmission in various warehousing scenarios.

In summary,
the rack provided by the embodiments of the present disclosure, which is a basic unit for warehousing, serves as the foundation of the warehousing system. The racks can be arranged in multiple tiers or arranged in a transverse splicing manner, wherein the multiple racks can share one fixed rail conveying apparatus, or each of the racks is provided with one or more fixed rail conveying apparatus. The fixed rail conveying apparatus is provided with the transverse rail for the upright to move. Through the configuration of the racks and the modification of the top of the warehousing space and the bottom tier of the rack, an operating passage is provided for the freight robot or the sorting robot, which fundamentally solves the problem of waste of warehousing space in the existing warehousing system. Meanwhile, the task module of the warehouse accesses the bin(s) and/or good(s) driven by the movable member, and puts them into the docking assembly of the freight robot operating at the bottom of the racks, or removes them from the docking assembly, so that the good(s)/bin(s) of the warehouse cooperates with the freight robot or the sorting robot. It is possible to complete warehousing of the goods, conveying of the goods/bin, and sorting of the goods/bin in the warehousing space, thereby greatly improving the utilization of warehousing space, goods in-out speed, and sorting efficiency of the existing rack warehousing system.

Although preferred embodiments of the present disclosure have been described, those skilled in the art can make additional changes and modifications to these embodiments once they have learned the basic inventive concepts. Therefore, the appended claims are intended to be construed to include the preferred embodiments and all changes and modifications falling within the scope of the present disclosure.

Obviously, those skilled in the art can make various changes and variations to the present disclosure without departing from the spirit and scope of the present disclosure. In this way, if these modifications and variations of the present disclosure fall within the scope of the claims of the present disclosure and its equivalent technology, the present disclosure also intends to include these modifications and variations.

### Industrial Applicability

In summary, the rack provided by the embodiments of the present disclosure, which is a basic unit for warehousing, serves as the foundation of the warehousing system, thereby greatly improving the utilization of warehousing space, goods in-out speed, and sorting efficiency of the existing rack warehousing system.

## Claims

1. A rack, configured for warehousing, wherein the rack is provided with multiple tiers of reservation units; bins are placed in slots of the reservation units; and the rack is provided with a fixed rail conveying apparatus on one side and/or both sides;
the fixed rail conveying apparatus, through a first movable member, drives a task module for accessing the bins and/or goods, and places the goods into a docking assembly of a freight robot operating at a bottom of the rack or removes the goods from the docking assembly;
partition plates of one or more slots, at a lowest tier of the rack, are removed from the rack to provide a passage for a freight robot, or
one or more rack tiers are removed from the rack to provide a matching height to support an operation of the freight robot on ground.

2. The rack according to claim 1, wherein the fixed rail conveying apparatus comprises:
a transverse rail, a first upright, a first movable member, and a connection mechanism of the task module, wherein
the transverse rail is fixed to the rack;
the first upright is vertically arranged on the transverse rail and is transversely slidable;
the first movable member is arranged on the first upright and is slidable along the first upright;
and
the connection mechanism of the task module is arranged on the first movable member.

3. The rack according to claim 2, wherein
when the task module is a push-pull bin module, the connection mechanism of the task module is provided with:
a support structure of the push-pull bin module,
and
a conveying assembly of the push-pull bin module.

4. The rack according to claim 3, applicable to a rectangular cubic warehousing space, wherein the warehousing space is provided with multiple rows of the racks, and the rectangular cubic warehousing space is movable.

5. The rack according to claim 3 or claim 4, wherein the racks are arranged in multiple tiers, the racks in multiple tiers share one fixed rail conveying apparatus, or each of the racks is provided with one or more fixed rail conveying apparatus.

6. The rack according to claim 3 or claim 4, wherein the racks are spliced transversely, and the transversely spliced racks share one fixed rail conveying apparatus, or each of the racks is provided with one or more fixed rail conveying apparatus.

7. The rack according to any one of claims 2-6, further comprising a second upright and a second movable member, wherein the second upright is vertically arranged on the transverse rail and is transversely slidable;
the second movable member is arranged on the second upright and is slidable along the second upright;
a connection mechanism of the task module is arranged on the second movable member; and
the task module is arranged between the first upright and the second upright via the connection mechanism,
so that the task module is driven to be positioned at a storage position or a docking position on the rack.

8. The rack according to any one of claims 4-7, further comprising another transverse rail fixed to a lower part of the rack, wherein
the two transverse rails are respectively connected to the first upright and second upright via sliding blocks; and
the sliding blocks move on the transverse rails under a drive of rollers, and the rollers are driven by a motor.

9. The rack according to any one of claims 4-8, wherein
a synchronous pulley driven by the motor and controlled by a speed reducer is provided, and the synchronous belt pulley drives a synchronous belt to support a movement of the first movable member along a sliding rail of the first upright; and
another synchronous pulley driven by the motor and controlled by the speed reducer is provided, and the another synchronous belt pulley drives another synchronous belt to support the movement of the second movable member along a sliding rail of the second upright.

10. The rack according to any one of claims 1-9, wherein the freight robot is an AGV.

11. The rack according to any one of claims 1-9, wherein the freight robot is an autonomous mobile robot.

12. A warehousing system, provided with the rack according to any one of claims 1-11.

13. A conveying system, comprising the warehousing system according to claim 12 and a freight robot.
